# EUROPEAN PATENT APPLICATION

(11) **EP 1 622 291 A1**
(43) Date of publication of application: **01.02.2006**
(21) Application number: 04291952.2
(22) Date of filing: 29.07.2004
(51) Int. Cl.: H04B 10/17, H01S 3/30

(54) **Method and system for generating a pump signal for a raman amplification application**

(71) Applicant: ALCATEL, 75008 Paris (FR)
(72) Inventor: Leplingard, Florence, 75350 Juuy en Josas (FR); Mongardien, Dominique A., 92160 Antony (FR); Martinelli, Catherine, 91120 Palaiseau (FR); Bayart, Dominique, 92140 Clamart (FR)
(74) Representative: Dreiss, Fuhlendorf, Steimle & Becker

(57) **Abstract**

A system for generating a pump signal for a Raman amplification application is described. The system comprises a Raman fiber laser (RFL) for providing an initial pump signal (IPUMP). Furthermore, the system comprises a source (SG) for providing an initial probe signal (IPROBE) wherein the initial probe signal (IPROBE) is provided at a wavelength corresponding to a so-called Stokes shift of the initial pump signal (IPUMP). A Raman fiber (RF) of a given length is provided wherein the initial pump signal (IPUMP) and the initial probe signal (IPROBE) are fed to the Raman fiber (RF). A resulting pump signal (RPUMP) is present at the end of the Raman fiber (RF) that may be used in the Raman amplification application.

## Description

The invention relates to a method and a system for generating a pump signal for a Raman amplification application.

It is known to use laser diodes or Raman lasers as a pump signal for Raman amplification applications. For specific applications, it is required to pump with a low relative intensity noise (RIN). Therefore, laser diodes designed specifically with a low relative intensity noise are used.

However, in order to provide a high power, it is necessary to combine a number of such laser diodes. Apparently, this combination increases the costs of the entire system.

It is an object of the invention to provide a method and a system for generating a pump signal for a Raman amplification application that has a low relative intensity noise and a high power at low costs.

The invention solves this object with the following steps: providing an initial pump signal and an initial probe signal wherein the initial probe signal is provided at a wavelength corresponding to a so-called Stokes shift of the initial pump signal, feeding the initial pump signal and the initial probe signal to a Raman fiber of a given length, using a resulting pump signal at the end of the Raman fiber in the Raman amplification application.

According to the invention, the initial pump signal and the initial probe signal are coupled and then fed to the Raman fiber. Depending on the length of the Raman fiber, the relative intensity noise of the resulting pump signal is reduced without loosing too much power. The resulting pump signal, therefore, may be used as a pump signal for a Raman amplification application that has a low relative intensity noise.

In addition, the invention only requires the provision of the Raman fiber and the injection of the initial pump signal and the initial probe signal. This results in a system with low costs. Furthermore, if a Raman fiber laser is used to inject the initial pump signal, the power of the resulting pump signal may be scaled very easily and inexpensive.

In an embodiment of the invention, the length of the Raman fiber is optimized depending on the characteristics of at least one of the initial pump signal and the initial probe signal. In particular, the length of the Raman fiber is optimized depending on the power and/or the wavelength of the initial pump signal or the initial probe signal.

In another embodiment of the invention, the length of the Raman fiber is optimized depending on characteristics of the Raman fiber, in particular depending on the dispersion of the Raman fiber.

With regard to the optimization, it is advantageous to evaluate a minimum value of the relative intensity noise of the resulting pump signal along the length of the Raman fiber.

With the above features, it is possible to optimize the length of the Raman fiber such that the relative intensity noise of the resulting pump signal is at a minimum value and that the power of the resulting pump signal is only reduced by a little amount.

Further features, applications and advantages of the invention will become apparent from the following description of exemplary embodiments of the invention which are shown in the drawings. There, all described and shown features themselves or in any combination represent the subject matter of the invention, independently of their wording in the description or their representation in the drawings and independently of their combination in the claims or the dependencies of the claims.
Figure 1 shows a schematic circuit diagram of an embodiment of a system for generating a pump signal for a Raman amplification application according to the invention,
figure 2 shows a schematic diagram of the power of signals of the system of figure 1, and
figure 3 shows a schematic diagram of the relative intensity noise (RIN) of signals of the system of figure 1.

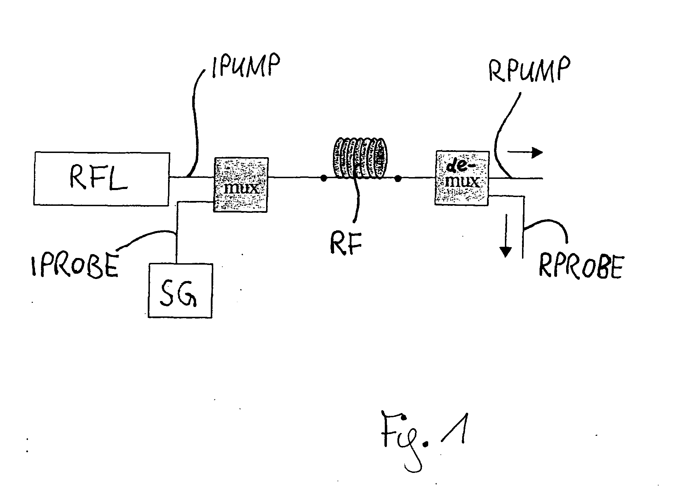

In figure 1, a system for generating a pump signal for a Raman amplification application is shown.

The system comprises a Raman fiber laser RFL for generating a pump signal. At the output of the Raman fiber laser RFL, the pump signal is depicted as an initial pump signal IPUMP. The system also comprises a source SG for generating a probe signal. The signal has preferably a low relative intensity noise (RIN) and should have a large enough spectrum that allows to stay below the so-called Brillouin threshold. For example, a source with several channels or a source with many longitudinal modes may be used. The resulting probe signal is depicted in figure 1 as an initial probe signal IPROBE.

The initial probe signal IPROBE is provided at a wavelength corresponding to the first so-called Stokes shift of the initial pump signal IPUMP. The wavelength of the initial probe signal IPROBE, therefore, corresponds to a wavelength generated by the so-called Raman effect from the wavelength of the initial pump signal IPUMP in a fiber.

Furthermore, the initial pump signal IPUMP and the initial probe signal IPROBE are provided in co-propagation. This means that the initial probe signal IPROBE and the initial pump signal IPUMP are injected in a fiber at the same end and thus are propagating in the same direction.

The initial pump signal IPUMP and the initial probe signal IPROBE are fed into a multiplexer MUX. The output of the multiplexer MUX is connected to a Raman fiber RF, e.g a reverse dispersion fiber (RDF). At its other end, the Raman fiber RF is connected to a de-multiplexer DE-MUX that provides a resulting pump signal RPUMP and a resulting probe signal RPROBE at its outputs.

The resulting pump signal RPUMP may be used as a pump signal in Raman amplification applications.

The following characteristics of the initial pump signal IPUMP, the initial probe signal IPROBE and the Raman fiber RF are given as an example of a possible implementation of the system of figure 1. Of course, other implementations are also possible.

The power of the initial pump signal IPUMP is selected to be 5 dBm and the power of the initial probe signal is selected to be 29 dBm. The dispersion of the Raman fiber RF is selected to be -20 ps/nm.km and the length of the Raman fiber RF is selected to be 4,1 km.

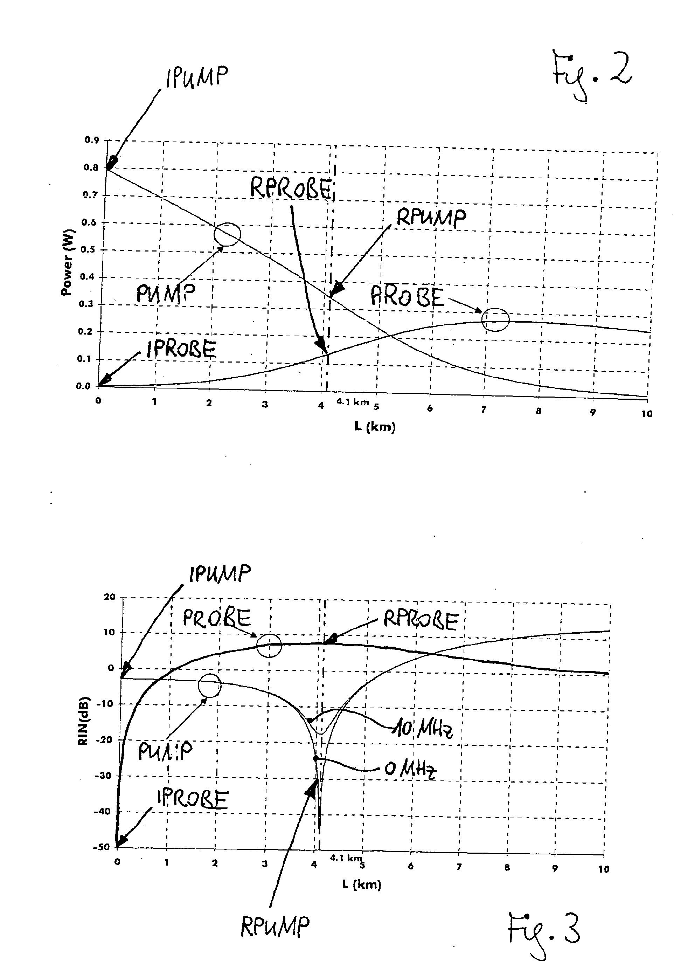

Based on these characteristics, figure 2 shows the changes of the power of the initial pump signal IPUMP and the initial probe signal IPROBE along the length of the Raman fiber RF. The initial pump signal IPUMP and the initial probe signal IPROBE are depicted at the one end of the Raman fiber RF, i.e. at 0 km, and the resulting pump signal RPUMP and the resulting probe signal RPROBE are depicted at the other end of the Raman fiber RF, i.e. at 4,1 km. The curve of the pump signal along the length of the Raman fiber RF is depicted as PUMP and the curve of the probe signal along this length is depicted as PROBE.

As can be seen from figure 2, the power of the pump signal PUMP decreases along the length of the Raman fiber RF so that the power of the resulting pump signal RPUMP is reduced compared to the power of the initial pump signal IPUMP. The power reduction in the shown particular example is about 3,6 dB for a length of 4,1 km of the Raman fiber RF. Typically, the power reduction is between 2 dB to 4 dB.

As can also be seen from figure 2, the power of the probe signal PROBE increases along the length of the Raman fiber RF.

Based on the above selected characteristics, figure 3 shows the changes of the relative intensity noise (RIN) of the initial pump signal IPUMP and the initial probe signal IPROBE along the length of the Raman fiber RF. Again, the initial pump signal IPUMP and the initial probe signal IPROBE are depicted at the one end of the Raman fiber RF, i.e. at 0 km, and the resulting pump signal RPUMP and the resulting probe signal RPROBE are depicted at the other end of the Raman fiber RF, i.e. at 4,1 km. The curve of the pump signal along the length of the Raman fiber RF is depicted as PUMP and the curve of the probe signal along this length is depicted as PROBE.

As can be seen from figure 3, the relative intensity noise of the pump signal PUMP decreases along the length of the Raman fiber RF so that the relative intensity noise of the resulting pump signal RPUMP is reduced compared to the relative intensity noise of the initial pump signal IPUMP. In particular, it can be taken from figure 3 that the relative intensity noise of the resulting pump signal RPUMP is at a minimum value along the curve of the pump signal PUMP.

Furthermore, it can be taken from figure 3 that the relative intensity noise depends on the frequency. In particular, the maximum decrease of the relative intensity noise along the length of the Raman fiber RF at a frequency of 10 MHz is about 15 dB whereas this maximum decrease is about 40 dB at a frequency of 0 MHz. These two cases are differentiated in figure 3 with the afore-mentioned two frequencies.

In general, it can be taken from figure 3 that the decrease of the relative intensity noise along the length of the Raman fiber RF is reduced at higher frequencies compared to lower frequencies.

As already mentioned, the above characteristics of the initial pump signal IPUMP, the initial probe signal IPROBE and the Raman fiber RF only constitute one possible implementation of the system of figure 1. These characteristics have to be adapted to the specific requirements of the implementation to be established.

For example, an optimum length of the Raman fiber RF has to be evaluated for the implementation to be established. This optimum length may be a compromise between the reduction of the relative intensity noise and the reduction of the power along the length of the Raman fiber RF. Furthermore, a compromise may be required if a Raman fiber laser RFL is used that generates a multiple wavelength output signal.

Of course, adaptations or compromises may also be necessary with regard to the other mentioned characteristics, e.g. the dispersion of the Raman fiber RF or the power of the initial pump signal IPUMP or the power of the initial probe signal IPROBE or the like.

With these adaptations, the resulting pump signal RPUMP has a reduced relative intensity noise compared to the initial pump signal IPUMP so that it may be used as a co-pumping signal with high power and low relative intensity noise in a Raman amplification application.

## Claims

1. A method of generating a pump signal for a Raman amplification application comprising the following steps: providing an initial pump signal (IPUMP) and an initial probe signal (IPROBE) wherein the initial probe signal (IPROBE) is provided at a wavelength corresponding to a so-called Stokes shift of the initial pump signal (IPUMP), feeding the initial pump signal (IPUMP) and the initial probe signal (IPROBE) to a Raman fiber (RF) of a given length, using a resulting pump signal (RPUMP) at the end of the Raman fiber (RF) in the Raman amplification application.

2. The method of claim 1 comprising the step of multiplexing the initial pump signal (IPUMP) and the initial probe signal (IPROBE) prior to feeding them to the Raman fiber (RF).

3. The method of claim 1 comprising the step of demultiplexing the signal at the end of the Raman fiber (RF) for obtaining the resulting pump signal (RPUMP).

4. The method of claim 1 comprising the step of optimizing the length of the Raman fiber (RF) depending on the characteristics of at least one of the initial pump signal (IPUMP) and the initial probe signal (IPROBE).

5. The method of claim 4 comprising the step of optimizing the length of the Raman fiber (RF) depending on the power and/or the wavelength of the initial pump signal (IPUMP) or the initial probe signal (IPROBE).

6. The method of claim 1 comprising the step of optimizing the length of the Raman fiber (RF) depending on characteristics of the Raman fiber (RF), in particular depending on the dispersion of the Raman fiber (RF).

7. The method of at least one of claims 4 to 6 comprising the step of evaluating a minimum value of the relative intensity noise (RIN) of the resulting pump signal (RPUMP) along the length of the Raman fiber (RF).

8. A system for generating a pump signal for a Raman amplification application comprising: a Raman fiber laser (RFL) for providing an initial pump signal (IPUMP), a source (SG) for providing an initial probe signal (IPROBE) wherein the initial probe signal (IPROBE) is provided at a wavelength corresponding to a so-called Stokes shift of the initial pump signal (IPUMP), a Raman fiber (RF) of a given length wherein the initial pump signal (IPUMP) and the initial probe signal (IPROBE) are fed to the Raman fiber (RF) and wherein a resulting pump signal (RPUMP) at the end of the Raman fiber (RF) may be used in the Raman amplification application.

9. The system of claim 8 comprising a multiplexer (MUX) for coupling the initial pump signal (IPUMP) and the initial probe signal (IPROBE) prior to feeding them to the Raman fiber (RF).

10. The system of claim 8 comprising a de-multiplexer for obtaining the resulting pump signal (RPUMP) at the end of the Raman fiber (RF).
